# EUROPEAN PATENT APPLICATION

(11) **EP 0 557 232 A2**
(43) Date of publication of application: **25.08.1993**
(21) Application number: 93500019.0
(22) Date of filing: 15.02.1993
(51) Int. Cl.: G07F 17/26, H04N 1/34

(54) **Coin-operated public fax equipment**

(30) Priority: 19.02.1992 ES 9200512
(71) Applicant: ZARAFAX, S.L., E-50008 Zaragoza (ES)
(72) Inventor: Cuba Prieto, Abel, Zaragoza (ES)
(74) Representative: Gomez-Acebo y Pombo, José Miguel

(57) **Abstract**

Coin-operated public fax machine enclosed inside a casing (2), the command devices (5, 6 and 7) and the feed (4) and extraction (9) slots for the originals being accessible from the outside, and having the means (8a and 10) for introducing and returning coins, the said fax being connected to a control unit (12) that acts as an information source for a display (16) indicating the credit available in the coin deposit, a control unit (12) connected to a programming unit (15) which assists with a tariff-setting unit (13), the whole unit being supplied with electricity by a power supply unit (17).

## Description

This invention concerns coin-operated public fax equipment.

Nowadays, any fax user who does not own such a machine is perfectly aware of the fact that he depends on the opening hours of public establishments for using this service.

Fax is normally used by companies, but for individuals it is not profitable to buy fax equipment just for using it very occasionally since it is not economical, not just because of the price of the equipment but also because of its maintenance.

The subject of the invention is public fax equipment, operated by coins and therefore fitted in a kind of booth similar to that for telephones, so that anybody needing to use fax can enter the booth at any time of the day and then, after inserting some coins according to the length of time of the service, send the corresponding fax.

The equipment then remains out of use until the minimum coins needed for operating it are again inserted.

Coin-operated fax equipment for public use consists of the following parts:
- Fax machine.
- Tariff-setting impulse detector.
- System programming unit.
- Coin deposit or some system for managing coin collection from the service.
- Message display device for the user.
- Control unit for the system.
- Power supply system.

With the aim of facilitating an understanding of how the system operates, a description is given of the functioning of each of the parts.

For the purpose of this description, the following terms are understood:
- Stage. Referring to the minimum unit of tariff-setting.
- Collection. The act of taking a coin without possible return, and in exchange for the service provided.
- Transfer. The sending or receiving of information via fax.
- Credit. Monetary value that the user has in the system at any moment in order to establish or maintain the communication.

The fax machine is the basic equipment responsible for establishing the switched telephone network communication channel and for carrying out the transfer of information with the other equipment on the line.

This machine will have a variable formal arrangement for being connected to the telephone network.

Its connection to or disconnection from the line will be managed by the control unit.

The user will have a keyboard for the machine so that he can start or stop the transfer of the document.

Due to the fact that the price of the time used in communication is not constant, and that is depends on the tariff rate applying at that moment, tariff-setting impulses need to be obtained from the telephone line.

The tariff-setting impulse detector is responsible for extracting these impulses from the line, starting from an approved detector, and adapting them in order to inform the control unit of the stages used up in the communication.

The programming unit used for operating the equipment allows the manager or owner of the equipment to update the system each time the price of the tariff stage or unit is changed, the coins that are to be accepted and all the variables that many be relevant.

The programming mode must be clear and simple.

The coin deposit or collection management system will have a suitable device for accepting coins, where the user will deposit them before establishing communication and to the degree that the coins are going to be used up during the information transfer.

The coin deposit will be fitted with a retaining system for the coins in such a way that they can be collected individually and allow their return in the event of communication not being established.

The coin deposit will likewise include a validation system for the coins and coding of their value, as well as protection against attempts at fraud.

The coin deposit will inform the control unit of the value of the coin, and await from it orders regarding the acceptance, collection or return of the coin.

Similarly, the equipment will have a display whose main function will be that of informing the user of the value of the credit available to him for establishing and/or maintaining the communication.

The displayed value will be updated as the available credit is used up, and it will warn the user before communication is broken off due to the credit running out.

The display is controlled by its own hardware and receives information from the control unit.

The control unit is designed to store the functioning logic for the whole system. Standing out among its most important functions are the following:
- It acts as the information source for the display.
- It receives the code for the value of the coin introduced by the user, and generates the appropriate orders for collection or return by the coin deposit, depending on the status of the communication.
- It controls the connection or disconnection of the fax equipment.
- It receives the tariff-setting impulses and, depending on these, updates and manages the credit available to the user.
- It receives information from the programming unit that is uses for defining the system's most important variables.

Finally, the power supply unit generates all the supply voltages for the rest of the elements or blocks, depending on whether direct or alternating current is required.

It will have sufficient stability for ensuring correct supply to the system.

As an option, it can have a power failure detector device and the corresponding emergency power supply for ensuring that, in the event of the circumstantial lack of power, the fundamental variables of the system are retained in the control unit.

With the aim of more easily understanding not just the arrangement but also the use itself of the fax equipment forming the subject of the invention, referred to below is a practical example of carrying it out, without this being in any way restrictive, as shown in the diagrams, in which:

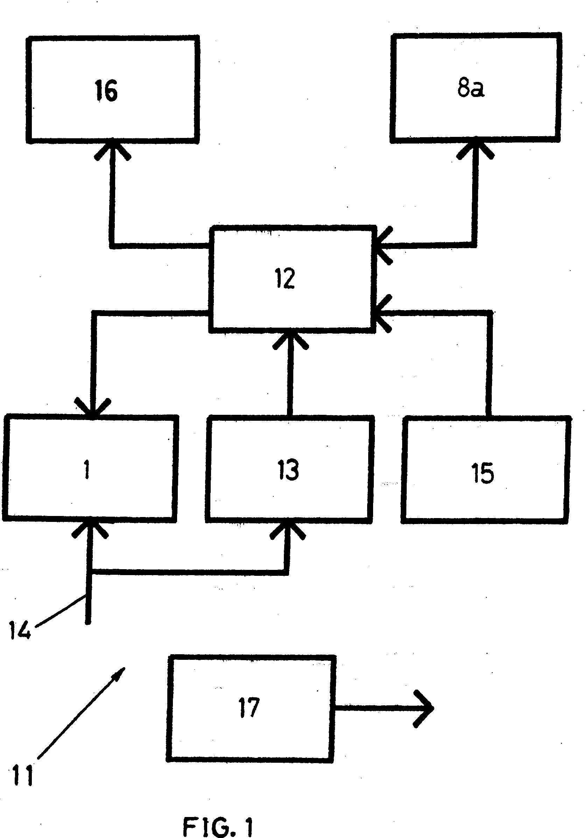

Figure 1 shows a schematic view in block diagram of the invention's fax equipment.

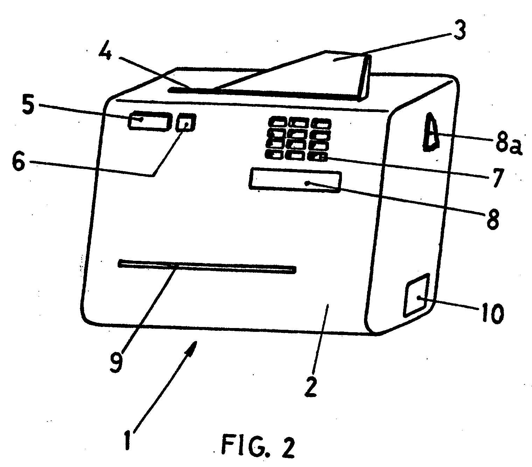

Figure 2 shows a perspective view of one way of carrying out the invention's fax equipment.

With regard to the diagrams, they show: the fax machine 1 consisting of a casing 2 in which appears an upper flap 3 partly defining an opening 4 for the introduction of documents supported on the said flap 3.

The casing also houses a keyboard with two command and send keys 5 and 6 and also the key marker 7 and a display 8 of the coin deposit.

The casing contains a horizontal opening 9 for the exit of documents sent by fax, and in the side it has a receptacle with a cover 10 for returning coins.

Represented in the block diagram 11 is the fax 1 linked to a control unit 12 and tariff-setting impulse detector 13 via the telephone line 14.

In the block diagram 11 the programming unit 15 is arranged in such a way that allows the owner of the fax to update the system each time that the price of the tariff "stage" or unit is changed, the coins that are to be accepted and all the variables that may be relevant.

The control unit 12 informs the coin deposit of the acceptance or return of the coin that has been introduced in the coin deposit.

The display 16 consists in informing the user of the value of the credit available for establishing and/or maintaining the communication.

The power supply unit 17 generates all the supply voltages for the rest of the elements or blocks, depending on whether direct or alternating current is required.

The nature of the invention, as well as the manner of carrying it out in practice, having been sufficiently described, it must be noted that arrangements stated above and represented in the attached diagrams are liable to modifications in their details inasmuch as these do not alter their fundamental principle.

## Claims

**1.-** Coin-operated public fax equipment, characterized by the fact that it includes a fax machine (1) connected to a control unit (12) which acts as an information source for a display (16) of the value of the credit inserted into the coin deposit for establishing and/or maintaining the communication, the control unit (12) at the same time receiving information from a programming unit (15) which assists in updating the equipment when the price of the tariff unit (13) is changed; and by the fact that a power supply unit (17) generates the supply voltages for the elements in direct or alternating current.

**2.-** Public fax equipment, as per patent claim 1, characterized by the fact that the fax machine (1) consists of a casing (2) provided with a flap (3) in the upper part which assists in supporting and positioning the documents introduced through an opening (4) after depositing in the coin deposit (8a) coins that put the equipment into operation by means of certain send and stop keys (5 and 6), once the marker key (7) has been operated; and by the fact that the casing (2) contains a display (8) and an outlet (9) for the documents.
